# EUROPÄISCHE PATENTSCHRIFT

(11) **EP 1 319 171 B1**
(45) Veröffentlichungstag und Bekanntmachung des Hinweises auf die Patenterteilung: **28.09.2016**
(21) Anmeldenummer: 01974110.7
(22) Anmeldetag: 04.08.2001
(51) Int. Cl.: G01D 9/00

(54) **VERFAHREN ZUR BEREITSTELLUNG VON MESSWERTEN FÜR ENDKUNDEN**
METHOD FOR PROVIDING MEASURED VALUES FOR END USERS
PROCÉDÉ POUR METTRE A DISPOSITION DES VALEURS DE MESURE DESTINÉES A DES UTILISATEURS FINAUX

(30) Priorität: 19.09.2000 DE 10046350; 23.03.2001 EP 01107314
(43) Veröffentlichungstag der Anmeldung: 18.06.2003
(73) Patentinhaber: ENDRESS + HAUSER GMBH + CO., 79689 Maulburg (DE)
(72) Erfinder: DITTRICH, Gerhard, 79650 Schopfheim (DE)
(74) Vertreter: Andres, Angelika Maria
(86) Internationale Anmeldenummer: PCT/EP2001/009033
(87) Internationale Veröffentlichungsnummer: WO 2002/025221

(56) Entgegenhaltungen:
- WO-A1-00/39532
- US-A- 4 415 896
- US-A- 5 841 360
- MUELLER R: "LON - DAS UNIVERSELLE NETZWERK TEIL 1. ÖEIN NEUARTIGES KONZEPT, UM STEUERGERAETE, SENSOREN UND AKTOREN MITEINANDER SPRECHEN ZU LASSEN" ELEKTRONIK,DE,FRANZIS VERLAG GMBH. MUNCHEN, Bd. 40, Nr. 22, 29. Oktober 1991 (1991-10-29), Seiten 59-62,64-65,, XP000268228 ISSN: 0013-5658

## Beschreibung

Die Erfindung betrifft ein Verfahren zum Bereitstellen von Meßwerten für Endkunden.

In der Prozeßautomatisierung werden vielfach Feldgeräte eingesetzt, die Prozeßabläufe in Fabrikationsanlagen regeln oder steuern.
Beispiele für Feldgeräte sind Füllstandsmesser, die den Füllstand in einem Flüssigkeitsbehälter bestimmen, Druckmesser, die den Druck einer Flüssigkeit oder eines Gases z. B. in einer Rohrleitung bestimmen, Massedurchflußmesser, die den Massedurchfluß einer Flüssigkeit in einem Rohrleitungsabschnitt bestimmen oder Ventile, die den Durchfluß in einem Rohrleitungsabschnitt regeln.
Feldgeräte lassen sich im wesentlichen in zwei Gruppen einteilen, nämlich Sensoren, die eine Prozeßvariable wie Füllstand, Druck, Massedurchfluß oder Temperatur bestimmen oder Aktoren, die eine Prozeßvariable wie z. B. den Durchfluß in einem Rohrleitungsabschnitt beeinflussen. Ein Beispiel für Aktoren sind Ventile.
In der Regel sind Feldgeräte über eine Datenverbindung mit einem Prozeßleitsystem verbunden, das den gesamten Prozeßablauf in einer Frabrikationsanlage steuert.

Die Datenübertragung auf dieser Datenleitung erfolgt nach den bekannten Standards wie z. B. Hart, Profibus oder Fieldbus.
Über die Datenverbindung werden die Meßwerte, die ein Sensor liefert an das Prozeßleitsystem weitergegeben und dort verarbeitet. Die Steuerbefehle vom Prozeßleitsystem werden ebenfalls über die Datenverbindung an die entsprechenden Aktoren weitergeleitet, die dann entsprechend reagieren und z. B. ein Ventil öffnen oder schließen.

Die Feldgeräte werden an den Endkunden verkauft, der sie an der gewünschten Prozeßkomponente einsetzt.

Teilweise sind die Prozeßkomponenten nicht räumlich in einer Fabrikationsanlage zusammengefaßt sondern verteilt, so daß eine direkte Verbindung der Feldgeräte mit einem Prozeßleitsystem z.B. über ein Datenbussystem zu aufwendig wäre. Beispiele für derartige Prozeßkomponenten sind verteilte Tankbehälter für Kraftstoff bzw. Brennstoff, Kalkbehälter zur Bekämpfung von Waldschäden durch Sauren Regen, die in Waldgebieten weit verstreut aufgestellt werden.

Hier erfolgt die Datenübertragung zum Prozeßleitsystem per Funk.

Für den Endkunden ist eigentlich nur der Meßwert interessant, den der Sensor liefert. Er benötigt in seinem Prozeßleitsystem nur diesen Wert um die Fabrikationsanlage steuern zu können.

Wie der Meßwert gewonnen wird, ist für den Endkunden unbedeutend. Für den Endkunden ist entscheidend, daß ihm ein zuverlässiger Meßwert zur Verfügung gestellt wird.

Der Endkunde bezahlt heutzutage den Sensor und nicht das was er eigentlich benötigt, den Meßwert.

Ein defekter Sensor liefert keine Meßwerte und ist somit für den Endkunden unbrauchbar. Für einen Sensor, der keine Meßwerte liefert möchte der Endkunde auch nicht bezahlen.

Manche Endkunden benötigen die Meßwert in relativ kurzen Zeitabständen, andere benötigen den Meßwert nur relativ selten. Beide Endkunden bezahlen aber für den Sensor den gleichen Betrag, obwohl sie es unterschiedlich oft nutzen.

Aus dem Stand der Technik ist die internationale Patentanmeldung WO 00/39532 A1 bekannt geworden, die ein System mit verteilt wählbaren latenten faseroptischen Sensoren beschreibt. Das System umfasst eine Mehrzahl von Faser-Gitter-Sensoren, welche sich in einer Öl / Gasbohrung befinden und an einer optischen Faser mit einer Instrumentenbox, welche sich an der Oberfläche befindet, verbunden sind. Die Instrumentenbox dient unter anderem dazu, eine Aktivierung bzw. Deaktivierung der Sensoren entsprechend einer vorgegeben Auswahl zu treffen, sodass ein Endnutzer nur für die ausgewählten bzw. aktivierten Sensoren zahlt.

Aufgabe der Erfindung ist es, ein Verfahren zum Bereitstellen von Meßwerten für Endkunden nach Anspruch 1 anzugeben, das die oben genannten Nachteile nicht aufweist, das insbesondere eine kostengünstige Bereitstellung von Meßwerten für Endkunden ermöglicht.

Gelöst wird diese Aufgabe durch ein Verfahren mit folgenden Verfahrensschritten.
1. Erfassen eines Meßwertes einer Prozeßvariablen mit Hilfe eines Sensors.
2. Übertragen des Meßwertes an ein Prozeßleitsystem.
3. Zählen der Anzahl der Übertragungsvorgänge.
4. Berechnung der Kosten für den Endkunden in Abhängigkeit der Anzahl der Übertragungsvorgänge.

Der wesentliche Vorteil der Erfindung besteht darin, daß der Endkunde nicht mehr für den Sensor selbst zahlt, sondern nur für das, was er wirklich benötigt, nämlich den Meßwert.

Vorteilhafte Weiterentwicklungen der Erfindung sind in den Unteransprüchen angegeben.

Die Datenübertragung zwischen Sensor und Prozeßleitsystem kann leitungsgebunden, z.B. über ein Datenbussystem oder per Funk erfolgen.

Die Speicherung der Anzahl der Übertragungsvorgänge erfolgt im Sensor.

In einer vorteilhaften Weiterentwicklung der Erfindung werden die Meßwerte per Internet zum Feldgerätehersteller gesendet und in einer Datenbank abgespeichert. Der Endkunde greift ebenfalls via Internet auf diese Datenbank zu, wenn er den Meßwert benötigt. Bei dieser Weiterentwicklung werden die Anzahl der Datenbankzugriffe gezählt.

In einer alternativen Ausgestaltung der Erfindung werden die Meßwerte per Funk z.B. über GSM zu einem Provider gesendet, der mit Feldgerätehersteller verbunden ist. Hierbei werden ebenfalls die Meßwerte in einer Datenbank beim Feldgerätehersteller abgespeichert und können ebenfalls dem Endkunden auf entsprechende Anfrage zur Verfügung gestellt werden.

Nachfolgend ist die Erfindung anhand eines in der Zeichnung dargestellten bevorzugten Ausführungsbeispiels näher erläutert:

Es zeigen:
Fig. 1 Datenbussystem mit mehreren Sensoren, die mit einem Prozeßleitsystem über einen Datenbus verbunden ist, in schematischer Darstellung,
Fig. 2 Blockschaltbild eines Sensors

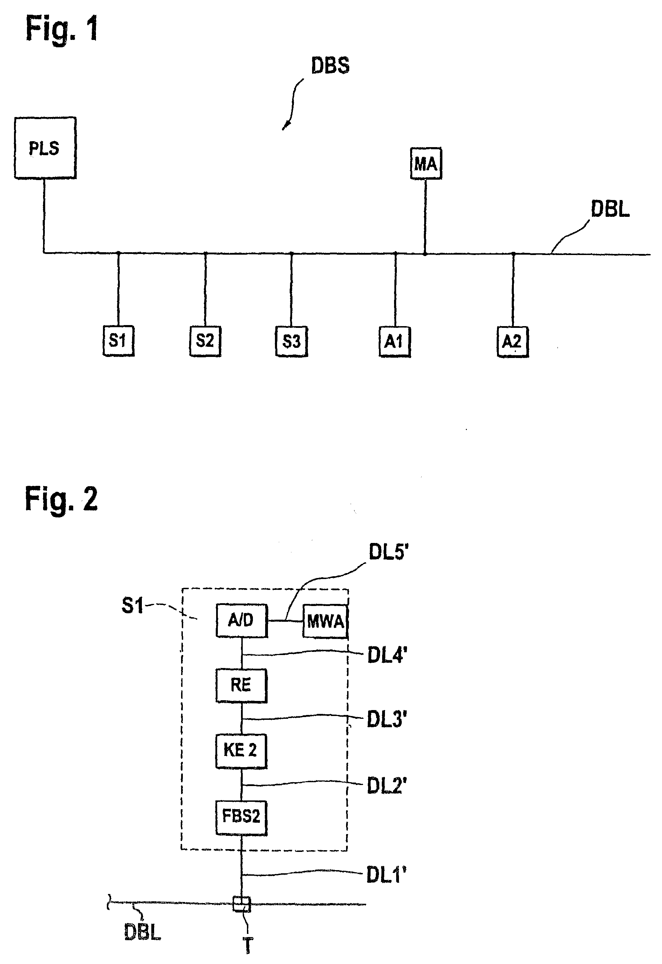

Das in Fig. 1 dargestellte Datenbussystem DBS umfaßt mehrere Datenbusteilnehmer nämlich ein Prozeßleitsystem PLS, mehrere Sensoren S und mehrere Aktoren A sowie eine Meßwertanzeigeeinheit MA, die jeweils über eine Datenbusleitung DBL miteinander verbunden sind. Das Prozeßleitsystem PLS ist in der Regel in einem Kontrollraum angeordnet, von dem aus die gesamte Prozeßsteuerung erfolgt. Die Sensoren S und Aktoren A sind "im Feld" bei den einzelnen Prozeßkomponenten (Tank, Befüllvorrichtung, Pipeline etc.) angeordnet und werden deshalb auch als Feldgeräte bezeichnet. Die Sensoren S1, S2 und S3 erfassen z.B. die Prozeßvariablen Temperatur T, Druck D und Durchfluß F an einer bestimmten Prozeßkomponente. Bei den Aktoren A1 und A2 handelt es sich z.B. um Ventilsteuerungen, die den Durchfluß einer Flüssigkeit oder eines Gases durch eine Rohrleitung regeln.
Die Datenkommunikation zwischen dem Prozeßleitsystem PLS, den Sensoren S und den Aktoren A erfolgt in bekannter Weise nach einer international standardisierten Übertragungstechnik (z.B. RS 485 oder IEC 1158) mittels spezieller Protokolle (z.B. Profibus oder Foundation Fieldbus).

Die Funktionsweise der Datenkommunikation ist nachfolgend anhand des Sensors S1 näher erläutert (Fig.2). Mit dem Sensor S1 wird eine Prozeßvariable, z.B. die Temperatur T einer Flüssigkeit (nicht dargestellt) mit einem Meßwertaufnehmer MWA erfaßt und das Meßsignal in einem A/D- Wandler A/D als Meßwert digitalisiert. Der Meßwertaufnehmer MWA und der A/D-Wandler A/D sind über eine Datenleitung DL5' miteinander verbunden. Der Meßwert wird vom A/D-Wandler A/D über eine Datenleitung DL4' an eine Rechnereinheit RE weitergeleitet und dort abgespeichert.
Die Rechnereinheit RE übergibt zyklisch oder auf Aufforderung durch das Prozeßleitsystem PLS den Meßwert über eine Datenleitung DL3' an eine Kommunikationseinheit KE, die den Meßwert in ein Telegramm umsetzt, das über eine Datenleitung DL2' und eine Feldbusschnittstelle FBS2 auf die Datenbusleitung DBL gegeben wird.
Die Feldbusschnittstelle FBS2 unterstützt alle Sende- und Empfangsfunktionen entsprechend der eingesetzten Übertragungstechnik.
Das Telegramm enthält u.a. neben dem digitalisierten Meßwert Informationen zum Sender und zum Empfänger in Form von Datenbusadressen DA, die jeden Datenbusteilnehmer eindeutig kennzeichnen. In diesem Fall enthält das Telegramm die Datenbusadresse des Temperatursensors S1 und die Datenbusadresse des gewünschten Empfängers.
Soll der Meßwert vom Sensor S1 an das Prozeßleitsystem PLS übertragen werden, so muß als Empfängeradresse die Datenbusadresse des Prozeßleitsystems PLS gewählt werden. Schickt das Prozeßleitsystem PLS ein Telegramm an den Temperatursensor S1, so ist die Datenbusadresse des Temperatursensors S1 die Empfängeradresse und die Datenbusadresse des Prozeßleitsystems PLS die Absenderadresse.
Das Datenbussystem DBS kann z.B. nach dem Master-Slave-Prinzip arbeiten. D.h. das Prozeßleitsystem PLS fordert über ein Anruftelegramm einen bestimmten Sensor, z.B. den Sensor S1 auf, seinen Meßwert auf die Datenbusleitung DBL zu geben.
Der Sensor S1 antwortet mit einem entsprechenden Antworttelegramm, in dem der Meßwert enthalten ist.
Diese Aufforderung erfolgt meist zyklisch in bestimmten Zeitabständen.

Bei einem nach einem anderen Prinzip arbeitenden Datenbussystem geben die Sensoren S ihre Meßwerte selbständig in gewissen Zeitabständen (zyklisch) auf die Datenbusleitung DBL.
In der Rechnereinheit RE werden die Anzahl AZ der Übertragungen der Meßwerte gezählt und in einem in der Rechnereinheit integrierten Datenspeicher abgespeichert.
Die Anzahl AZ der Übertragungen der Meßwerte kann alternativ auch im Prozeßleitsystem PLS gezählt und in einem entsprechenden Datenspeicher abgespeichert werden. In jedem Fall muß jedoch eine Manipulation der Anzahl AZ der Übertragungen der Meßwerte ausgeschlossen werden.

Nachfolgend ist das erfindungsgemäße Verfahren näher erläutert.

In einem ersten Verfahrensschritt wird der Meßwert einer Prozeßvariablen z. B. Temperatur, Druck oder Durchfluß mit Hilfe eines Sensors S z. B. S1, S2 oder S3 erfaßt.
In einem zweiten Verfahrensschritt erfolgt die Übertragung des Meßwertes an das Prozeßleitsystem PLS. Die Übertragung kann entweder aufgrund einer Aufforderung vom Prozeßleitsystem PLS oder zyklisch durch den Sensor S erfolgen.
In einem dritten Verfahrensschritt wird die Anzahl AZ der Übertragungsvorgänge gezählt. In einem vierten Verfahrensschritt werden die Kosten für den Endkunden in Abhängigkeit der Anzahl AZ der Übertragungsvorgänge berechnet.

Mit diesem Verfahren ist es in einfacher Weise möglich, die Nutzung des Sensors S in Rechnung zu stellen. Der Endkunde bezahlt nicht mehr den Sensor S, sondern die Anzahl AZ der Meßwerte, die er vom Sensor S bezieht.
Der Feldgerätehersteller stellt dem Endkunden in kostengünstiger Weise Meßwerte zur Verfügung.

Das erfindungsgemäße Verfahren ist nicht auf leitungsgebundene Datenbussysteme beschränkt sondern auch für bei Funkübertragung einsetzbar. Der Sensor ist hierbei über Funk mit dem Prozeßleitsystem verbunden. Die Meßwerte werden hier per Funk zum Prozeßleitsystem gesendet.

Die Funkübertragung ist bei weit verstreuten Prozeßkomponenten, bei denen sich eine leitungsgebundene Verbindung zum Prozeßleitsystem nicht lohnt, von Vorteil.
Beispiele für solche Prozeßkomponenten sind Tankbehälter für Kraftstoff bzw. Brennstoff oder Kalkbehälter, wie sie zur Bekämpfung von Waldschäden durch Sauren Regen eingesetzt werden.
Bei Funkübertragung werden die Anzahl AZ der per Funk an das Prozeßleitsystem übertragenen Meßwerte gezählt.

In neuerer Zeit werden Meßwerte auch via Internet von Sensoren zu Prozeßleitsystemen bei Endkunden übertragen. In diesem Fall kann in einfacher Weise ein manipulationssicheres Zählen der Übertragungsvorgänge erfolgen. Die Meßwerte werden dabei nicht direkt vom Sensor zum Prozeßleitsystem des Endkunden gesendet, sondern über den Feldgerätehersteller. Der Feldgerätehersteller stellt hierfür eine Datenbank zur Verfügung, auf die der Endkunde Zugriff hat. Der Sensor überträgt den Meßwert zuerst via Internet an den Feldgerätehersteller, wo er in einer Datenbank abgespeichert wird. Benötigt der Endkunde den Meßwert, so ruft er diesen von der Datenbank ebenfalls via Internet ab.

In einer alternativen Ausgestaltung der Erfindung werden die Meßwerte per Funk z.B. über GSM zum Feldgerätehersteller gesendet. Hierbei werden die Meßwerte ebenfalls in einer Datenbank beim Feldgerätehersteller abgespeichert und können vom Endkunden auf entsprechende Anfrage z.B. über Internet zur Verfügung gestellt werden.

## Patentansprüche

1. Verfahren zum Bereitstellen von Meßwerten für Endkunden, mit folgenden Verfahrensschritten:
Erfassen eines Meßwertes einer Prozeßvariablen mit Hilfe eines Sensors S1, S2, S3,
Übertragen des Meßwertes an ein Prozeßleitsystem PLS,
Zählen der Anzahl A der Übertragungsvorgänge,
Berechnung der Kosten für den Endkunden in Abhängigkeit der Anzahl A der Übertragungsvorgänge,
**dadurch gekennzeichnet, dass**
die Anzahl A der Übertragungsvorgänge im Sensor S1, S2, S3 abgespeichert wird.

2. Verfahren nach Anspruch 1, wobei die Datenübertragung zwischen Sensor S1, S2, S3 und Prozeßleitsystem PLS leitungsgebunden z.B. über ein Datenbussystem DBS erfolgt.

3. Verfahren nach Anspruch 1, wobei die Datenübertragung zwischen Sensor S1, S2, S3 und Prozeßleitsystem PLS per Funk erfolgt.

4. Verfahren nach einem der vorhergehenden Ansprüche wobei die Meßwerte via Internet vom Sensor S1, S2, S3 zu einer Datenbank beim Feldgerätehersteller übertragen werden, auf die der Endkunde ebenfalls via Internet Zugriff hat und die Anzahl der Datenbankzugriffe des Endkunden auf diese Datenbank gezählt werden.

5. Verfahren nach einem der vorhergehenden Ansprüche 1-4 wobei die Meßwerte via Funk (z.B. GSM) vom Sensor S1, S2, S3 zu einer Datenbank beim Feldgerätehersteller übertragen werden, auf die der Endkunde ebenfalls via Internet Zugriff hat und die Anzahl der Datenbankzugriffe des Endkunden auf diese Datenbank gezählt werden.

## Claims

1. Procedure for providing measured values for end customers, said procedure comprising the following steps:
Recording of a measured value of a process variable using a sensor S1, S2, S3,
Transmission of the measured value to a process control system PCS,
Counting of the number A of transmission processes,
Calculation of the costs for the end customer depending on the number A of the transmission processes,
**characterized in that**
the number A of the transmission processes is recorded in the sensor S1, S2, S3.

2. Procedure as claimed in Claim 1, wherein data transmission between the sensor S1, S2, S3 and the process control system PCS takes place via a wired connection, e.g. via a data bus system DBS.

3. Procedure as claimed in Claim 1, wherein data transmission between the sensor S1, S2, S3 and the process control system PCS takes place via wireless communication.

4. Procedure as claimed in one of the previous claims, wherein the measured values are transmitted via the Internet from the sensor S1, S2, S3 to a database at the field device manufacturer's, wherein the end customer also has access via Internet to said database and the number of client accesses to this database is counted.

5. Procedure as claimed in one of the previous Claims 1-4, wherein the measured values are transmitted by wireless communication (e.g. GSM) from the sensor S1, S2, S3 to a database at the field device manufacturer's wherein the end customer also has access via Internet to said database and the number of client accesses to this database is counted.

## Revendications

1. Procédé destiné à la mise à disposition de valeurs mesurées pour le client final, avec les étapes de procédé suivantes :
Acquisition d'une valeur mesurée d'une grandeur process à l'aide d'un capteur S1, S2, S3,
Transmission de la valeur mesurée à un système numérique de contrôle commande,
Comptage du nombre A de processus de transmission,
Calcul des coûts pour le client final en fonction du nombre A des processus de transmission,
**caractérisé**
**en ce que** le nombre A de processus de transmission est enregistré dans le capteur S1, S2, S3.

2. Procédé selon la revendication 1, pour lequel la transmission de données est réalisée avec une liaison filaire entre le capteur S1, S2, S3 et le système numérique de contrôle commande, par exemple par l'intermédiaire d'un système de bus de données DBS.

3. Procédé selon la revendication 1, pour lequel la transmission de données entre le capteur S1, S2, S3 et le système numérique de contrôle commande s'effectue par liaison radio.

4. Procédé selon l'une des revendications précédentes, pour lequel les valeurs mesurées sont transmises via Internet depuis le capteur S1, S2, S3 vers une base de données chez le fabricant d'appareils de terrain, base de données à laquelle le client final a également accès via Internet et pour laquelle le nombre d'accès du client à cette base de données est compté.

5. Procédé selon l'une des revendications 1 à 4, pour lequel les valeurs mesurées sont transmises via liaison radio (p. ex. GSM) depuis le capteur S1, S2, S3 vers une base de données chez le fabricant d'appareils de terrain, base de données à laquelle le client final a également accès via Internet et pour laquelle le nombre d'accès du client à cette base de données est compté.
